# EUROPEAN PATENT APPLICATION

(11) **EP 2 408 024 A1**
(43) Date of publication of application: **18.01.2012**
(21) Application number: 09841311.5
(22) Date of filing: 10.03.2009
(51) Int. Cl.: H01L 33/00

(54) **METHOD FOR GENERATING WHITE LIGHT AND LIHGTING DEVICE**

(71) Applicant: Ocean's King Lighting Science&Technology Co., Ltd., Guangdong 518052 (CN)
(72) Inventor: ZHOU, Mingjie, Guangdong 518052 (CN); MA, Wenbo, Guangdong 518052 (CN)
(74) Representative: Asensio, Raffaella Consuelo
(86) International application number: PCT/CN2009/070708
(87) International publication number: WO 2010/102442

(57) **Abstract**

A method for generating white light and a lighting device are provided. The method comprises exciting blue cathodoluminescence material by FED to generate blue light; exciting yellow photoluminescence material by the blue light generated to generate yellow light, complexing the residual blue light that do not excite the yellow photoluminescence material and the yellow light to generate a white light.

## Description

### FIELD OF THE INVENTION

The present invention belongs to microelectronics technical field and relates to a method and device for generating white light, in particular to a method and device for generating white light based on field emission devices.

### BACKGROUND OF THE INVENTION

With the rapid development of lighting technology, the research and exploitation on the substitutes of traditional light source, i.e. energy-saving and environment-friendly green lighting sources, have become important tasks carried out in many countries competitively. While field emission device in the vacuum microelectronics filed has revealed a new approach for obtaining the green eco-lighting. The operating principle of the field emission device is as follows. In a vacuum environment, a forward voltage is applied on field emission arrays (FEAs) to form an accelerating field by an anode, then the electrons emitted by a cathode bombard the luminescent material on an anode plate after acceleration to emit light. Such device has wide operating temperature range (-40 -80 ), short response time (<1 ms), simple structure, and is energy-saving and corresponds to the demands of green environment protection. Compared with the traditional fluorescent tube, the field emission light source is one kind of energy-saving green lighting source, which can avoid some disadvantages of the fluorescent tube such as environment pollution and visual fatigue caused by pulse flash while maintaining the advantages of fluorescent tube such as high efficiency and energy saving. Compared with LED, the field emission light source possesses more advantages in the aspects of high power and large scale lighting, and is probable to become a powerful competitor of LED in the aspect of high power light source since its field emission cathode can be prepared in large scale.

In the prior field emission white lighting technology, a white light is obtained through the excitation of an electron beam on three-colored fluorescent powder formed by the mixing of red, green and blue (R, G, B) fluorescent powder in appropriate proportions. However, when the mixture of the R, G, B fluorescent powder is used, the color coordinate of generated white light deviates obviously and the light source efficiency declines after a long time of the irradiation of the electron beam since the aging characteristics of each fluorescent material are different.

### SUMMARY OF THE INVENTION

The objective of the present invention is to provide a method for generating white light, by which a long service time is realized and the obvious deviation of the color coordinate and the decline of light source efficiency are not easy to appear, aiming at the problems that in the prior lighting method, the color coordinate of generated white light deviates obviously and the light source efficiency declines after a long time of irradiation on the three-colored fluorescent powder since the aging characteristics of different fluorescent material are different.

Another objective of the present invention is to provide a lighting device for generating white light, by which a long service time is realized and the obvious deviation of the color coordinate and the decline of light source efficiency are not easy to appear, aiming at the problems that in the prior device, a white light is obtained through the excitation of an electron beam on three-colored fluorescent powder formed by the mixing of red, green and blue (R, G, B) fluorescent powder in appropriate proportions; the color coordinate of generated white light deviates obviously and the light source efficiency declines after a long time of irradiation on the three-colored fluorescent powder since the aging characteristics of different fluorescent material are different.

According to an aspect, a method for generating white light is provided, which comprises exciting a blue cathodoluminescence material by a field emission device (FED) to generate a blue light, exciting a yellow photoluminescence material by the generated blue light to generate a yellow light and complexing residual blue light that do not excite the yellow photoluminescence material and the generated yellow light to generate a white light.

The field emission device is specifically a blue-light field emission device; the blue light generated by the excitation of the blue-light field emission device on the blue cathodoluminescence material exhibits a spectrum peak at a wavelength ranging from 420 nm to 490 nm.

The blue cathodoluminescence material is selected from a group consisting of Y₂SiO₅:Ce, SrGa₂S₄:Ce, ZnS:Ag, ZnS:Tm, Sr₂CeO₄, ZnS:Zn and AlN:Eu;
Or La₍₁₋ₓ₎Ga_{(1-y)}Al_{y}O₃: xTm; wherein a range of x is 0< x≤0.1 and a range of y is 0≤y≤1;
Or the La₍₁₋ₓ₎Ga_{(1-y)}Al_{y}O₃:xTm in which the La is partly or completely substituted by Y, Gd, Lu or Sc; wherein the range of x is 0< x≤0.1 and the range of y is 0≤y≤1.

The yellow photoluminescence material is preferably rare earth garnet fluorescent powder taking Ce as an activator.

The rare earth garnet fluorescent powder taking Ce as the activator is preferably RE₃(Al₁₋ₓGaₓ)₅O₁₂: Ce; wherein a range of x is 0≤x≤1 and RE is selected from a group consisting of at least one of Y, Tb, Gd, Lu and La.

According to an aspect, a lighting device for generating white light is provided, which comprises a cathode plate component, an anode plate component interval-placed opposite to the cathode plate component and a supporting body connecting the both components together hermetically; the anode plate component comprises a transparent substrate provided with a layer of yellow photoluminescence material, on a lower surface of the transparent substrate a transparent anode and a layer of blue cathodoluminescence material are arranged in turn from top to bottom, or on the lower surface of the transparent substrate a layer of blue cathodoluminescence material and a metal anode are arranged in turn from top to bottom.

The layer of yellow photoluminescence material is specifically a transparent epoxy layer dispersed with the yellow photoluminescence material.

The layer of yellow photoluminescence material is attached to an upper surface of the transparent substrate or interval-placed above the transparent substrate.

The layer of yellow photoluminescence material is made from rare earth garnet fluorescent powder taking Ce as an activator.

The rare earth garnet fluorescent powder taking Ce as the activator is RE₃(Al₁₋ₓGaₓ)₅O₁₂: Ce; wherein a range of x is 0≤x≤1 and RE is at least one of Y, Tb, Gd, Lu and La.

The layer of blue cathodoluminescence material is a layer of blue cathodoluminescence material generating a blue light exhibits a spectrum peak at a wavelength ranging from 420 nm to 490 nm when excited by the cathode ray.

The layer of blue cathodoluminescence material is made from Y₂SiO₅: Ce, SrGa₂S₄: Ce, ZnS: Ag, ZnS: Tm, Sr₂CeO₄, ZnS: Zn or AIN: Eu;
and La₍₁₋ₓ₎Ga_{(1-y)}Al_{y}O₃: xTm; wherein a range of x is 0< x≤0.1 and a range of y is 0≤y≤1;
and the La₍₁₋ₓ₎Ga_{(1-y)}Al_{y}O₃: xTm in which the La is partly or completely substituted by Y, Gd, Lu or Sc; wherein the range of x is 0< x≤0.1 and the range of y is 0≤y≤1.

Among them, Y₂SiO₅: Ce means the luminescent material Y₂SiO₅ which takes Ce as the activator and the meanings of the remaining SrGa₂S₄: Ce, ZnS: Ag, ZnS: Tm, ZnS: Zn and AlN: Eu are the same. La₍₁₋ₓ₎Ga_{(1-y)}Al_{y}O₃: xTm means the luminescent material La₍₁₋ₓ₎Ga_{(1-y)}Al_{y}O₃ which takes Tm as the activator.

A brand-new method is utilized to realize the white light generation of field emission device in the present invention, that is exciting a blue cathodoluminescence material by a field emission device (FED) to generate a blue light, exciting a yellow photoluminescence material by the generated blue light to generate a yellow light and complexing the residual blue light that do not excite the yellow photoluminescence material and the yellow light to generate a white light. Since only one kind of blue cathodoluminescence material is directly irradiated by the electron beam in the field emission device of the present invention, the overall aging characteristic of the device basically depends on the aging characteristics of this material. Therefore, the aging problem of the light source device can be reduced effectively if only one kind of blue cathodoluminescence material with preferred stability is selected and utilized. The probability that the color coordinate deviates and the light source efficiency declines can be reduced significantly thereby on condition that the light source device has been used for a long time.

The lighting device for generating white light in the present invention is provided with the anode plate component different from that in the prior art besides the existing cathode plate component. For this anode plate component, an anode and a luminescent layer are arranged on the lower surface of the transparent substrate facing the cathode plate. The luminescent layer is a layer of blue cathodoluminescence material. When excited by the electron beam, the luminescent layer just emits a blue light with a spectrum peak of 420-490 nm. Meanwhile, there is also a luminescent layer on the upper surface of the transparent substrate. The luminescent layer is composed of a yellow photoluminescence material capable of emitting a yellow light and absorbing the blue light at 420-490 nm. The blue light passes through the transparent substrate and then illuminates the layer of yellow photoluminescence material, a yellow light with a spectrum peak of 540-590 nm is emitted afterwards. A white light is then formed by complexing the residual blue light and the emitted yellow light. For this lighting device, by changing the structure and constitution of the luminescent layer of the anode plate module of traditional field emission light source and only selecting one kind of blue cathodoluminescence material with preferred stability to form the luminescent layer, the aging problem of field emission device can be reduced effectively. Accordingly, the device can be used for a long time and the probability that the color coordinate deviates and the light source efficiency declines is reduced. The device in the present invention can be applied on the large scale and high power lighting easily.

According to the requirement on the wavelength range of the luminescence of the blue cathodoluminescence material in the present invention, the blue cathodoluminescence material suitable for the present invention comprises Y₂SiO₅:Ce, SrGa₂S₄:Ce, Sr₂CeO₄, ZnS:Ag, ZnS:Tm, ZnS:Zn, AlN:Eu and La₍₁₋ₓ₎Ga_{(1-y)}Al_{y}O₃:xTm (wherein the range of x is 0≤x≤0.1 and the range of y is 0≤y≤1; besides, La can be partly or completely substituted by Y, Gd, Lu and Sc) etc.. This kind of material possesses better luminescence property when excited by the cathode ray.

In the present invention, the yellow photoluminescence material is selected to be the rare earth garnet fluorescent powder taking Ce as the activator, which fits the formula RE₃ (Al₁₋ₓGaₓ)₅O₁₂:Ce; wherein the range of x is 0≤x≤1 and the rare earth element RE can be chosen from at least one of Y, Tb, Gd, Lu and La. In particular, when RE=Y or Tb, the yellow photoluminescence material is YAG: Ce and TAG:Ce, respectively. This kind of material can absorb the blue light at about 450 nm and emit the yellow light in the range of 540-590 nm effectively.

The yellow photoluminescence material can be dispersed in the transparent epoxy directly and spread onto the outside surface of the glass substrate directly to form the layer of yellow photoluminescence material. Its preparation is simple and convenient.

### BRIEF DESCRIPTION OF THE DRAWINGS

The present invention will be further described with reference to the accompanying drawings and embodiments in the following. In the Figures:
Figure 1 is the cathodoluminescence spectrum of the blue cathodoluminescence material ZnS: Ag, the excitation and emission spectrogram of the yellow photoluminescence material YAG:Ce in the example3 of the present invention;
Figure 2 is the cathodoluminescence spectrum of the blue cathodoluminescence material La_{0.99}GaO₃:0.01Tm, the excitation and emission spectrogram of the yellow photoluminescence material YAG:Ce in the example7 of the present invention;
Figure 3 is the structure diagram of the lighting device in the example 14;
Figure 4 is the structure diagram of the lighting device in the example 15.

The test conditions applied for the cathodoluminescence spectrogram are as follows: the excitation voltage is 5 kV and the beam current is 8 µA.

SHIMADZU RF-5301 fluorescence spectrograph is used for the measurement of the excitation and emission spectrum.

### DETAILED DESCRIPTION OF THE PREFERRED EMBODIMENT

The present invention will be further described by the usage of the embodiments and accompanying drawings in the following.

The raw materials in the embodiments can be bought from a common market and can be used immediately.

### Example 1: a method for generating a white light

The method comprises exciting a blue cathodoluminescence material Y₂SiO₅:Ce (the commercial product produced by RIYA chemical industry joint-stock company is utilized) by the blue-light field emission device to generate a blue light at 420-490 nm, exciting a yellow photoluminescence material Y₃(Al_{0.8}Ga_{0.2})₅O₁₂ taking Ce as the activator by use of the generated blue light to generate a yellow light and complexing the residual blue light that do not excite the yellow photoluminescence material and the generated yellow light to generate a white light.

### Example 2: a method for generating a white light

The method comprises exciting a blue cathodoluminescence material SrGa₂S₄:Ce by the blue-light field emission device to generate a blue light at 420-490 nm, exciting a yellow photoluminescence material Tb₃ (Al_{0.6}Ga_{0.4})₅O₁₂ taking Ce as the activator by use of the generated blue light to generate a yellow light and complexing the residual blue light that do not excite the yellow photoluminescence material and the generated yellow light to generate a white light.

### Example 3: a method for generating a white light

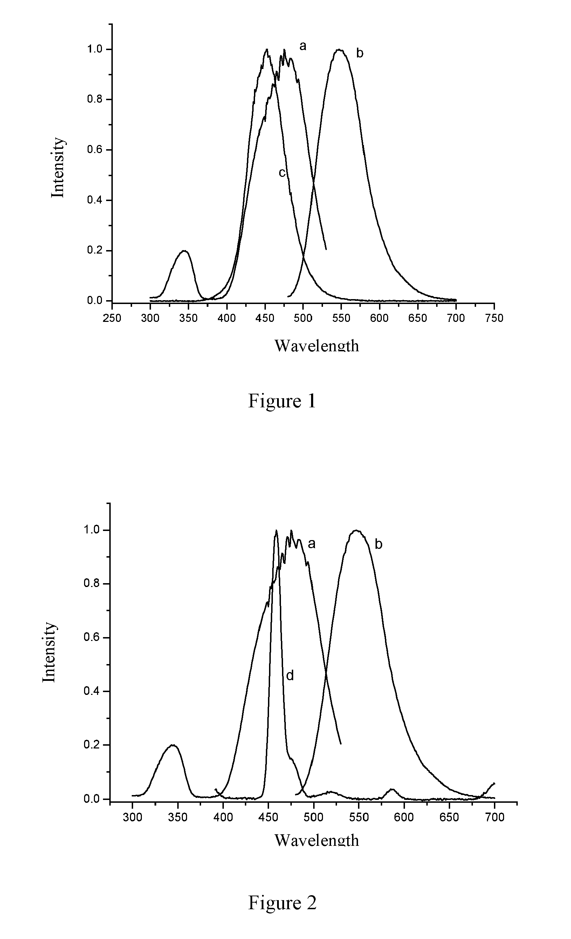

The method comprises exciting a blue cathodoluminescence material ZnS: Ag (the product produced by Shanxi rainbow fluorescent material LTD is utilized) by the blue-light field emission device to generate a blue light at 420-490 nm, exciting a yellow photoluminescence material Y₃Al₅O₁₂ (the product produced by Dalian LUMING lighting technology LTD is utilized) taking Ce as the activator by the generated blue light to generate a yellow light and complexing the residual blue light that do not excite the yellow photoluminescence material and the generated yellow light to generate a white light. As shown in Figure 1, a is the measured excitation spectrum of the yellow photoluminescence material Y₃Al₅O₁₂:Ce (YAG:Ce) at a monitoring wavelength of 550 nm. b is the measured emission spectrum of the yellow photoluminescence material Y₃Al₅O₁₂:Ce (YAG:Ce) at a excitation wavelength of 450 nm; c is the cathodoluminescence spectrum of ZnS: Ag at an accelerating voltage of 5 kV. All the spectrums above have been normalized. It can be seen from the figure that the cathodoluminescence spectrum of ZnS:Ag is about 450 nm, which is just in the effective excitation range of YAG:Ce. In this way, a portion of the blue light emitted by ZnS:Ag can be absorbed by YAG:Ce, which emits the yellow light at about 550 nm under the excitation of the cathode ray. Then a white light is produced by complexing the residual blue light that do not excite the yellow photoluminescence material YAG:Ce and the generated yellow light.

### Example 4: a method for generating a white light

The method comprises exciting a blue cathodoluminescence material AlN:Eu by the blue-light field emission device to generate a blue light at 420-490 nm, exciting a yellow photoluminescence material Gd₃Ga₅O₁₂ taking Ce as the activator by the generated blue light to generate a yellow light and complexing the residual blue light that do not excite the yellow photoluminescence material and the generated yellow light to generate a white light.

### Example 5: a method for generating a white light

The method comprises exciting a blue cathodoluminescence material ZnS:Zn by the blue-light field emission device to generate a blue light at 420-490 nm, exciting a yellow photoluminescence material (Y_{0.9},Gd_{0.1})₃(Al_{0.8}Ga_{0.2})₅O₁₂ taking Ce as the activator by the generated blue light to generate a yellow light and complexing the residual blue light that do not excite the yellow photoluminescence material and the generated yellow light to generate a white light.

### Example 6: a method for generating a white light

The method comprises exciting a blue cathodoluminescence material ZnS:Tm by the blue-light field emission device to generate a blue light at 420-490 nm, exciting a yellow photoluminescence material Y₃Ga₅O₁₂ taking Ce as the activator by the generated blue light to generate a yellow light and complexing the residual blue light that do not excite the yellow photoluminescence material and the generated yellow light to generate a white light.

### Example 7: a method for generating a white light

The method comprises exciting a blue cathodoluminescence material La_{0.99}GaO₃:0.01Tm by the blue-light field emission device to generate a blue light at 420-490 nm, exciting a yellow photoluminescence material Y₃Al₅O₁₂ taking Ce as the activator (the product produced by Dalian LUMING lighting technology LTD is utilized) by the generated blue light to generate a yellow light and complexing the residual blue light that do not excite the yellow photoluminescence material and the generated yellow light to generate a white light. As shown in Figure 2, a and b are the excitation spectrum and emission spectrum of the yellow photoluminescence material Y₃Al₅O₁₂:Ce, respectively, d is the cathodoluminescence spectrum of La_{0.99}GaO₃: 0.01Tm at an accelerating voltage of 5 kV. All the spectrums above have been normalized. It can be seen from the figure that the cathodoluminescence spectrum of La_{0.99}GaO₃: 0.01Tm is about 460 nm, which is just in the effective excitation range of YAG:Ce. In this way, a portion of the blue light emitted by La_{0.99}GaO₃: 0.01Tm can be absorbed by YAG: Ce, which emits the yellow light at about 550 nm under the excitation of the cathode ray. Then a white light is produced by complexing the residual blue light that do not excite the yellow photoluminescence material YAG:Ce and the generated yellow light.

### Example 8: a method for generating a white light

The method comprises exciting a blue cathodoluminescence material La_{0.99}AlO₃ 0.01Tm by the blue-light field emission device to generate a blue light at 420-490 nm, exciting a yellow photoluminescence material Lu₃Ga₅O₁₂ taking Ce as the activator by the generated blue light to generate a yellow light and complexing the residual blue light that do not excite the yellow photoluminescence material and the generated yellow light to generate a white light.

### Example 9: a method for generating a white light

The method comprises exciting a blue cathodoluminescence material La_{0.99}(Ga_{0.8}Al_{0.2})O₃: 0.01Tm by the blue-light field emission device to generate a blue light at 420-490 nm, exciting a yellow photoluminescence material La₃Ga₅O₁₂ taking Ce as the activator by the generated blue light to generate a yellow light and complexing the residual blue light that do not excite the yellow photoluminescence material and the generated yellow light to generate a white light.

### Example 10: a method for generating a white light

The method comprises exciting a blue cathodoluminescence material Y_{0.98}(Ga_{0.8}Al_{0.2})O₃:0.02Tm by the blue-light field emission device to generate a blue light at 420-490 nm, exciting a yellow photoluminescence material Y₃Al₅O₁₂ taking Ce as the activator by the generated blue light to generate a yellow light and complexing the residual blue light that do not excite the yellow photoluminescence material and the generated yellow light to generate a white light.

### Example 11: a method for generating a white light

The method comprises exciting a blue cathodoluminescence material Sc_{0.99}(Ga_{0.8}Al_{0.2})O₃: 0.01Tm by the blue-light field emission device to generate a blue light at 420-490 nm, exciting a yellow photoluminescence material Y₃Al₅O₁₂ taking Ce as the activator by the generated blue light to generate a yellow light and complexing the residual blue light that do not excite the yellow photoluminescence material and the generated yellow light to generate a white light.

### Example 12: a method for generating a white light

The method comprises exciting a blue cathodoluminescence material Lu_{0.99}(Ga_{0.7}Al_{0.3})O₃: 0.01Tm by the blue-light field emission device to generate a blue light at 420-490 nm, exciting a yellow photoluminescence material Y₃Al₅O₁₂ taking Ce as the activator by the generated blue light to generate a yellow light and complexing the residual blue light that do not excite the yellow photoluminescence material and the generated yellow light to generate a white light.

### Example 13: a method for generating a white light

The method comprises exciting a blue cathodoluminescence material Sr₂CeO₄ by the blue-light field emission device to generate a blue light at 420-490 nm, exciting a yellow photoluminescence material Y₃Al₅O₁₂ taking Ce as the activator by the generated blue light to generate a yellow light and complexing the residual blue light that do not excite the yellow photoluminescence material and the generated yellow light to generate a white light.

### Example 14

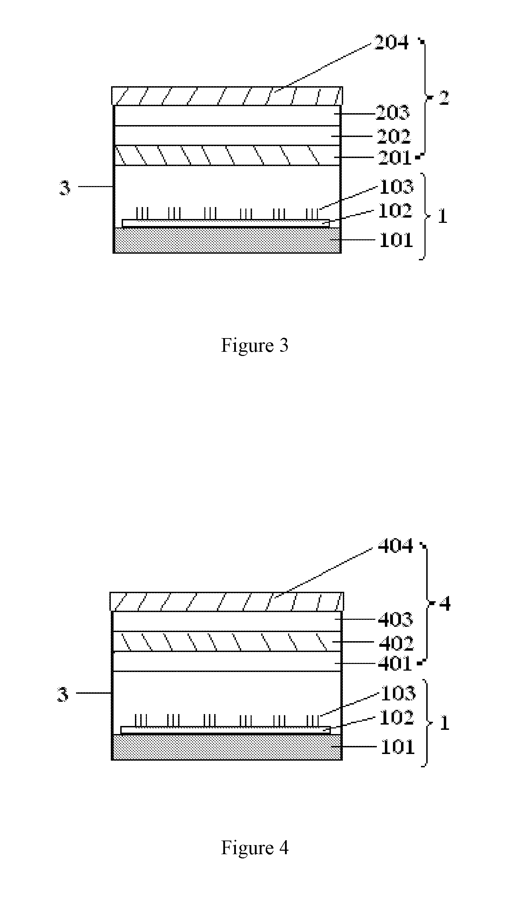

As shown in Figure 3, a lighting device for generating a white light comprises a cathode plate component 1, an anode plate component 2 interval-placed opposite to the cathode plate component and a supporting body 3 connecting the both components together hermetically. Wherein, the cathode plate component 1 comprises a cathode plate 101 and a conductive cathode, a grid wire 102 and an electron emission source 103 arranged on the surface of the cathode plate 101. The anode plate component 2 comprises a transparent substrate 203. The transparent substrate 203 is a glass substrate, on the lower surface of which are provided with a transparent anode 202 and a layer of blue cathodoluminescence material 201 in turn from top to bottom. Indium tin oxide ITO or zinc oxide ZnO is mainly used as raw material while the raw material is spread onto the transparent substrate 203 thereafter to form the transparent anode 202 by means of magnetic control sputtering or vacuum evaporation. The layer of blue cathodoluminescence material 201 is a layer of cathodoluminescence material ZnS: Ag, which is coated on the lower surface of the transparent anode 202 by means of screen printing. A layer of yellow photoluminescence material 204 is arranged above the transparent substrate 203. A yellow photoluminescence material YAG that takes Ce as the activator is selected and used in the layer of yellow photoluminescence material 204. The yellow photoluminescence material YAG that takes Ce as the activator is firstly dispersed in the transparent epoxy and then the mixture is spread onto the upper surface of the transparent substrate 203 to form the layer of yellow photoluminescence material 204 by means of spinning or spraying. The anode plate component 2 and the cathode plate component 1 are separated and sealed to form a vacuum space inside. The potential difference between the cathode plate 101 and the transparent anode 202 can be selected to between 1-20KV, for example, each of 2, 4, 5, 7, 10, 12, 15, 17, 18 and 20KV is possible; wherein 4-15KV is preferable.

### Example 15

As shown in Figure 4, a lighting device for generating a white light comprises a cathode plate component 1, an anode plate component 4 interval-placed opposite to the cathode plate component and a supporting body 3 connecting the both components together hermetically. The structure of the cathode plate component 1 is the same as that of the cathode plate component 1 in the example 14, which is not illustrated for conciseness.

The anode plate component 4 comprises a transparent substrate 403 and a layer of blue cathodoluminescence material 402 formed on the transparent substrate 403 (ZnS:Ag is selected as the blue material). A layer of metal aluminum is vapor-plated on the layer of blue cathodoluminescence material 402 as the metal anode 401. A layer of yellow photoluminescence material 404 (YAG:Ce is selected as the yellow photoluminescence material) is arranged above the transparent substrate 403. The layer of yellow photoluminescence material 404 is a transparent epoxy layer dispersed with the yellow photoluminescence material. A vacuum space is formed since there is certain space between the layer of yellow photoluminescence material 404 and the transparent substrate 403. The coating of the layer of blue cathodoluminescence material 402 is the same as that in the example 14.

LaGaO₃: Tm, Y₂SiO₅: Ce, SrGa₂S₄: Ce, ZnS: Ag, ZnS: Tm, Sr₂CeO₄, ZnS: Zn, AlN:Eu; La_{0.99}Ga_{0.5}Al_{0.5}O₃:0.01Tm, La_{0.9}GaO₃:0.1Tm, La_{0.99}AlO₃:0.02Tm, La_{0.92}Ga_{0.6}Al_{0.4}O₃:0.08Tm, La_{0.6}Y_{0.33}Ga_{0.4}Al_{0.6}O₃:0.07Tm, Gd₀₉₆Ga_{0.35}Al_{0.65}O₃:0.04Tm, La_{0.2}Lu_{0.75} Ga_{0.8}Al_{0.2}O₃:0.05Tm etc. can also be selected as the blue fluorescent material.

Y₃Al₅O₁₂: Ce, Tb₃Al₅O₁₂: Ce, Gd₃Al₅O₁₂: Ce, Lu₃Al₅O₁₂: Ce, La₃Al₅O₁₂: Ce, Y₃Ga₅O₁₂: Ce, Y₃(Al_{0.9}, Ga_{0.1})₅O₁₂: Ce, Y₃(Al_{0.5}, Ga_{0.5})₅O₁₂: Ce, Y₃(Al_{0.1}, Ga_{0.9})₅O₁₂: Ce, Y₃(Al_{0.9}, Ga_{0.1})₅O₁₂: Ce, (Y_{0.9}, Gd_{0.1})₃(Al_{0.9}, Ga_{0.1})₅O₁₂: Ce, (Y_{0.5}, Gd_{0.5})₃(Al_{0.9,} Ga_{0.1})₅O₁₂: Ce, (Y_{0.1}, Gd_{0.9})₃(Al_{0.9}, Ga_{0.1})₅O₁₂: Ce etc. can also be selected as the yellow photoluminescence material.

## Claims

1. A method for generating white light, wherein comprising following steps: exciting a blue cathodoluminescence material by a field emission device to generate a blue light, exciting a yellow photoluminescence material by the generated blue light to generate a yellow light and complexing residual blue light that do not excite the yellow photoluminescence material and the generated yellow light to generate a white light.

2. The method for generating white light according to claim 1, wherein the field emission device is a blue-light field emission device; the blue light generated by the excitation of the blue-light field emission device on the blue cathodoluminescence material exhibits a spectrum peak at a wavelength ranging from 420 nm to 490 nm.

3. The method for generating white light according to claim 2, wherein the blue cathodoluminescence material is selected from a group consisting of Y₂SiO₅: Ce, SrGa₂S₄: Ce, ZnS: Ag, ZnS: Tm, Sr₂CeO₄, ZnS: Zn and AlN: Eu;
Or La₍₁₋ₓ₎Ga_{(1-y)}AlyO₃: xTm; wherein a range of x is 0< x≤0.1 and a range of y is 0≤y≤1;
Or the La₍₁₋ₓ₎Ga_{(1-y)}Al_{y}O₃: xTm in which La is partly or completely substituted by Y, Gd, Lu or Sc; wherein the range of x is 0< x≤0.1 and the range of y is 0≤y≤1.

4. The method for generating white light according to any of claim 1∼3, wherein the yellow photoluminescence material is rare earth garnet fluorescent powder taking Ce as an activator.

5. The method for generating white light according to claim 4, wherein the rare earth garnet fluorescent powder taking Ce as the activator is RE₃(Al₁₋ₓGaₓ)₅O₁₂: Ce; wherein a range of x is 0≤x≤1 and RE is selected from a group consisting of at least one of Y, Tb, Gd, Lu and La.

6. A lighting device for generating white light, comprising a cathode plate component, an anode plate component interval-placed opposite to the cathode plate component and a supporting body connecting the both components together hermetically; wherein, the anode plate component comprises a transparent substrate provided with a layer of yellow photoluminescence material, on a lower surface of the transparent substrate a transparent anode and a layer of blue cathodoluminescence material are arranged in turn from top to bottom, or on the lower surface of the transparent substrate a layer of blue cathodoluminescence material and a metal anode are arranged in turn from top to bottom.

7. The lighting device for generating white light according to claim 6, wherein the layer of yellow photoluminescence material is a transparent epoxy layer dispersed with the yellow photoluminescence material.

8. The lighting device for generating white light according to claim 6, wherein the layer of yellow photoluminescence material is attached to an upper surface of the transparent substrate or interval-placed above the transparent substrate.

9. The lighting device for generating white light according to claim 6, wherein the layer of yellow photoluminescence material is made from rare earth garnet fluorescent powder taking Ce as an activator.

10. The lighting device for generating white light according to claim 9, wherein the rare earth garnet fluorescent powder taking Ce as the activator is RE₃(Al₁₋ₓGaₓ)₅O₁₂: Ce; wherein a range of x is and RE selected from a group consisting of at least one of Y, Tb, Gd, Lu and La.

11. The lighting device for generating white light according to any of claim 6∼10, wherein the layer of blue cathodoluminescence material is a layer of blue cathodoluminescence material generating a blue light exhibits a spectrum peak at a wavelength ranging from 420 nm to 490 nm when excited by the cathode ray.

12. The lighting device for generating white light according to claim 11, wherein the layer of blue cathodoluminescence material is made from Y₂SiO₅: Ce, SrGa₂S₄: Ce, ZnS: Ag, ZnS: Tm, Sr₂CeO₄, ZnS: Zn or AlN: Eu;
Or La₍₁₋ₓ₎Ga_{(1-y)}Al_{y}O₃: xTm; wherein a range of x is 0< x≤0.1 and a range of y is 0≤y≤1;
Or the La₍₁₋ₓ₎Ga_{(1-y)}Al_{y}O₃:xTm in which the La is partly or completely substituted by Y, Gd, Lu or Sc; wherein the range of x is 0< x≤0.1 and the range of y is 0≤y≤1.
